# EUROPÄISCHE PATENTSCHRIFT

(11) **EP 4 681 310 B1**
(45) Veröffentlichungstag und Bekanntmachung des Hinweises auf die Patenterteilung: **24.06.2026**
(21) Anmeldenummer: 23794361.8
(22) Anmeldetag: 24.10.2023
(51) Int. Cl.: H02K 1/14, H02K 1/278, H02K 21/16

(54) **ELEKTROMECHANISCHE BREMSVORRICHTUNG FÜR EIN KRAFTFAHRZEUG**
ELECTROMECHANICAL BRAKING DEVICE FOR A MOTOR VEHICLE
DISPOSITIF DE FREINAGE ÉLECTROMÉCANIQUE POUR VÉHICULE AUTOMOBILE

(30) Priorität: 17.03.2023 BE 202305196
(43) Veröffentlichungstag der Anmeldung: 21.01.2026
(73) Patentinhaber: thyssenkrupp Presta AG, 9492 Eschen (LI); thyssenkrupp AG, 45143 Essen (DE)
(72) Erfinder: UNGVARI, Tamas, 1112 Budapest (HU); ARANYI, Csaba, 2049 Diósd (HU); POKOL, Dávid, 4625 Záhony (HU)
(74) Vertreter: thyssenkrupp Intellectual Property GmbH
(86) Internationale Anmeldenummer: PCT/EP2023/079637
(87) Internationale Veröffentlichungsnummer: WO 2024/193839

(56) Entgegenhaltungen:
- EP-B1- 3 691 943
- WO-A1-2016/203579
- DE-A1- 102014 222 064
- DE-A1- 102020 006 001
- DE-B4- 10 125 005
- JP-A- 2001 186 698
- JP-A- 2011 130 607
- US-A1- 2014 368 077
- US-A1- 2016 294 235
- US-A1- 2018 248 425
- US-A1- 2019 280 540
- US-B1- 8 446 121

## Beschreibung

### Stand der Technik

Die Erfindung betrifft eine elektromechanische Bremsvorrichtung für ein Kraftfahrzeug, umfassend eine von mindestens einem elektrischen Motor antreibbare Stellvorrichtung, von der ein Bremsteil verstellbar ist, wobei der Motor einen Stator und einen darin um eine Motorachse drehbar gelagerten Rotor aufweist, wobei der Stator einen Statoraußendurchmesser und einen Statorinnendurchmesser aufweist und eine Anzahl von über den Umfang verteilten, radial nach innen vorstehenden Statorzähnen umfasst, die in Umfangsrichtung am Statoraußendurchmesser eine Zahnbreite aufweisen und zwischen denen jeweils am Statorinnendurchmesser ein Statorspalt angeordnet ist, der eine Spaltbreite aufweist, und die mindestens eine Statorwicklung tragen, wobei der Rotor einen Rotordurchmesser und eine von der Anzahl der Statorzähne abweichende Polanzahl von über den Außenumfang verteilten Rotormagneten umfasst, die als Permanentmagnete ausgebildet sind und sich stabförmig axial parallel zur Rotorachse erstrecken, und die jeweils eine radiale Magnetdicke und in Umfangsrichtung eine Magnetbreite aufweisen, und die Rotormagnete jeweils am Rotordurchmesser in einem Magnetabstand beanstandet angeordnet sind, wobei zwischen den Statorzähnen und den Rotormagneten ein radialer Luftspalt mit einer radialen Luftspaltbreite ausgebildet ist, wobei das Verhältnis der Magnetdicke zur Magnetbreite zwischen 0,4 und 0,55 beträgt.

Eine derartige Bremsvorrichtung eines Kraftfahrzeugs ist als Reibungsbremse ausgebildet, bei dem ein am Fahrgestellt abgestütztes, relativ zur Drehung des zu bremsenden Rades feststehendes Bremsteil mittels einer Stellvorrichtung in Bremseingriff gebracht werden kann mit einem Gegenbremsteil, welches mit dem Rad rotiert. Im Bremseingriff wird ein Reibkontakt zwischen Bremsteil und Gegenbremsteil erzeugt, wobei das durch Reibung erzeugte Bremsmoment umso größer ist, je höher die von der Stellvorrichtung in der Verstellrichtung ausgeübte Verstellkraft ist.

Eine verbreitete Bauform sind die im Prinzip bekannten Scheibenbremsen, bei denen das Gegenbremsteil durch eine mit dem Rad rotierende Bremsscheibe gebildet wird, die von einem Bremssattel beidseitig axial umgriffen wird. Durch mindestens einen an dem Bremssattel axial abgestützten, bevorzugt linearen Stelltrieb kann ein Bremsteil, in der Regel ein Bremsbelag, in einer axialen Verstellrichtung verstellt und dadurch in Reibkontakt mit einer Axialseite der Bremsscheibe gebracht werden, wobei die Bremsscheibe zwischen dem verstellten Bremsteil und einem weiteren, axial gegenüberliegend an dem Bremssattel abgestützten Bremsteil im Bremseingriff reibschlüssig eingespannt wird.

Aus der DE 10 2017 123 266 A1 ist es bekannt, dass die Stellvorrichtung zwei in Verstellrichtung seriell angeordnete Stelltriebe aufweist. Jeder der Stelltriebe weist ein antriebsseitiges Antriebselement und ein relativ dazu linear in der axialen Verstellrichtung verstellbares abtriebsseitiges Abtriebselement auf. Zur Realisierung einer Verstellbewegung weist jedes Antriebselement ein Antriebsrad auf, bevorzugt ein Getrieberad wie ein Zahnrad oder dergleichen, welches durch einen elektrischen Motor, dem Stellmotor, um seine Achse drehend antreibbar ist. Die Drehung des Antriebsrads wird in dem Stelltrieb jeweils in eine relative Verstellbewegung bzw einen Stellhub des Abtriebselements relativ zum Antriebselement in der axialen Verstellrichtung umgesetzt. In dem gattungsgemäßen Stand der Technik sind die beiden Antriebsräder des ersten und zweiten Stelltriebs koaxial auf einer in der axialen Verstellrichtung liegenden gemeinsamen Achse angeordnet.

Ein Stelltrieb bildet jeweils eine in der Verstellrichtung axial wirksame Hub- oder Verstelleinrichtung. Beispielsweise kann ein Stelltrieb einen Spindeltrieb aufweisen, bei dem das Antriebselement eine Spindelmutter aufweist, und das Abtriebselement eine darin eingreifende Gewindespindel, oder umgekehrt. Es können auch andere Bauformen von Stelltrieben eingesetzt werden, die beispielsweise Rampenlager, Nocken- oder Kurvenscheiben, Kippstiftanordnungen oder dergleichen umfassen können, und ebenfalls eine Drehung des Antriebselements in eine lineare Verstellung des Abtriebselements umsetzen.

Zum Antrieb eines Stelltriebs ist jeweils ein Motor vorgesehen, der als Innen-Permanentmagnet-Synchronmotor ausgebildet ist. Dieser weist einen Stator mit Statorwicklungen auf, die auf einer Mehrzahl von über den Umfang verteilt angeordneten, radial nach innen auf die Motorachse gerichteten Statorzähnen gewickelt sind. Die Anzahl der Statorzähne entspricht dabei einem Mehrfachen der Phasenzahl der Motorbestromung. Der um die Motorachse drehbar gelagerte Rotor weist über seinen Außenumfang verteilt eine der Polzahl entsprechende Anzahl von Permanentmagneten auf, welche die Rotormagnete bilden und den Statorzähnen im Abstand des umlaufenden Luftspalts radial innen gegenüberliegen.

Eine gattungsgemäße Bremsvorrichtung der eingangs genannten Art ist beispielsweise aus der US 2016/294235 A1 bekannt.

Bei der gattungsgemäßen Bremsvorrichtung ist eine hohe Betriebssicherheit und Effizienz bei möglichst geringem Gewicht und Bauraumbedarf des bzw. der Motoren wesentlich. Die im Stand der Technik bekannten Motoren haben diesbezüglich Nachteile.

Angesichts der vorangehend erläuterten Problematik ist es eine Aufgabe der vorliegenden Erfindung, einen effizienten Antrieb und einen kompakten Aufbau einer gattungsgemäßen Bremsvorrichtung zu ermöglichen.

### Darstellung der Erfindung

Diese Aufgabe wird erfindungsgemäß gelöst durch die elektromechanische Bremsvorrichtung mit den Merkmalen des Anspruchs 1. Vorteilhafte Weiterbildungen ergeben sich aus den Unteransprüchen.

Bei einer elektromechanischen Bremsvorrichtung für ein Kraftfahrzeug, umfassend eine von mindestens einem elektrischen Motor antreibbare Stellvorrichtung, von der ein Bremsteil verstellbar ist, wobei der Motor einen Stator und einen darin um eine Motorachse drehbar gelagerten Rotor aufweist, wobei der Stator einen Statoraußendurchmesser und einen Statorinnendurchmesser aufweist und eine Anzahl von über den Umfang verteilten, radial nach innen vorstehenden Statorzähnen umfasst, die in Umfangsrichtung am Statoraußendurchmesser eine Zahnbreite aufweisen und zwischen denen jeweils am Statorinnendurchmesser ein Statorspalt angeordnet ist, der eine Spaltbreite aufweist, und die mindestens eine Statorwicklung tragen, wobei der Rotor einen Rotordurchmesser und eine von der Anzahl der Statorzähne abweichende Polanzahl von über den Außenumfang verteilten Rotormagneten umfasst, die als Permanentmagnete ausgebildet sind und sich stabförmig axial parallel zur Rotorachse erstrecken, und die jeweils eine radiale Magnetdicke und in Umfangsrichtung eine Magnetbreite aufweisen, und die Rotormagnete jeweils am Rotordurchmesser in einem Magnetabstand beanstandet angeordnet sind, wobei zwischen den Statorzähnen und den Rotormagneten ein radialer Luftspalt mit einer radialen Luftspaltbreite ausgebildet ist, wobei das Verhältnis der Magnetdicke zur Magnetbreite zwischen 0,4 und 0,55 beträgt, ist erfindungsgemäß vorgesehen, dass das Verhältnis der Luftspaltbreite zur Zahnbreite zwischen 0,45 und 0,65 beträgt.

Die radialen Innenseiten der Statorzähne begrenzen einen zylindrischen Statorinnendurchmesser. Der Innenquerschnitt der Statorzähne ist im Querschnitt entsprechend zylindrisch ausgebildet.

Die Zahnbreite entspricht der in einer Umfangsrichtung gemessenen Zahnfußbreite in einem radial äußeren, dem Luftspalt abgewandten Außenbereich eines Statorzahns. Dort können die Statorzähne mit einem bevorzugt hohlzylindrischen, in Umfangsrichtung durchgehenden oder segmentierten Statorkörper verbunden sein.

In ihrem radial innen liegenden, dem Luftspalt zugewandten Endbereich sind benachbarte Statorzähne in einem Statorspalt beabstandet, der eine in Umfangsrichtung gemessene Spaltbreite aufweist.

Die Rotormagnete sind derart außen an dem Rotor angebracht, dass sie mit ihren Außenflächen den Innenflächen der Statorzähne im Abstand der Luftspaltbreite radial gegenüberliegen.

Die stabförmigen Rotormagnete weisen ein in axialer Richtung parallel zur Motorachse langgestrecktes Vollprofil auf. Sie weisen bevorzugt einen durchgehenden Querschnitt auf und sind bevorzugt aus einem hartmagnetischen Magnetmaterial mit hoher Koerzitivfeldstärke ausgebildet, beispielweise SmCo-, NdFeB-Legierungen oder dergleichen.

Für den Querschnitt des Magnetmaterials ist ein Abmessungsverhältnis in radialer Richtung und in Umfangsrichtung definiert. Dadurch ist eine optimierte Verteilung des Magnetfelds erreichbar, wobei die Abmessungen und das Gewicht des Rotors in vorteilhafter Weise reduziert werden können. Daraus resultiert der Vorteil, dass ein relativ hohes Motormoment bei einem relativ kleinen Rotordurchmesser realisierbar ist. Entsprechend können der Statorinnendurchmesser und damit die Gesamtabmessungen und das Gewicht des Stators ebenfalls reduziert werden, so dass ein leistungsfähiger, leichter und kompakter Aufbau der Bremsvorrichtung ermöglicht wird.

Die vorteilhafte Bauraum- und Gewichtsreduzierung kann besonders hoch bei der Ausführung einer Bremsvorrichtung sein, die mindestens zwei Motoren aufweist. Dabei ist bevorzugt jeder der Motoren erfindungsgemäß ausgestaltet.

Erfindungsgemäß ist vorgesehen, dass das Verhältnis des Luftspalts zur Zahnbreite zwischen 0,45 und 0,65 beträgt. Besonders bevorzugt beträgt das Verhältnis der Luftspaltbreite zur Zahnbreite zwischen 0,5 und 0,6. Dadurch kann ein optimierter magnetischer Fluss realisiert werden, der ein hohes Motormoment und eine große Laufruhe bei kompakten Abmessungen und geringem Gewicht ermöglicht.

Es kann vorgesehen sein, dass die Rotormagnete einen rechteckigen Querschnitt aufweisen. Das im Querschnitt über die axiale Länge durchgehend rechteckige Vollprofil des Rotormagneten weist radial außen eine tangential zu einer Umfangsrichtung liegende, d.h. senkrecht zum Durchmesser stehende Außenfläche und eine dazu parallel radial innen liegende Innenfläche auf, und parallel zueinander und parallel zum Durchmesser des Rotors liegende Seitenflächen. Die Außenfläche, die Innenfläche und die Seitenflächen können bevorzugt im Wesentlichen eben ausgebildet sein. Derartige Rotormagnete können in vorteilhafter Weise mit optimierten magnetischen Eigenschaften kostengünstig bereitgestellt und in den Rotor integriert werden.

Alternativ kann vorgesehen sein, dass die Rotormagnete einen hohlzylindersegmentförmigen Querschnitt aufweisen. Der im Querschnitt hohlzylindersegmentförmige Rotormagnet weist eine zur Rotorachse koaxiale zylindrische Außenfläche auf, deren Durchmesser dem Rotordurchmesser entspricht, und eine dazu koaxiale zylindrische Innenfläche, deren Durchmesser dem Rotordurchmesser abzüglich der Magnetdicke entspricht. Die den Rotormagneten in Umfangsrichtung begrenzenden ebenen Seitenflächen stehen parallel zueinander und parallel zum Durchmesser des Rotors. Die zylindrische Außenfläche weist bevorzugt einen Zylinderdurchmesser auf, der dem Innendurchmesser des Stators abzüglich der Luftspaltbreite entspricht. Der Vorteil dabei ist, dass die Luftspaltbreite über den gesamten Umfang des Rotors konstant sein kann, wodurch ein optimierter magnetischer Fluss realisiert werden kann.

Alternativ zu den beiden vorgenannten Ausführungen ist es möglich, dass die Rotormagnete einen segmentartigen Querschnitt aufweisen mit einer zylindrischen Außenfläche und einer ebenen Innenfläche. Der Rotormagnet weist eine zur Rotorachse koaxiale zylindrische Außenfläche auf, deren Durchmesser dem Rotordurchmesser entspricht, und eine tangential zu einer Umfangsrichtung liegende, d.h. senkrecht zum Durchmesser stehende, im Wesentlichen ebene Innenfläche. Der Vorteil ist, dass die Luftspaltbreite über den gesamten Umfang konstant vorgegeben werden kann, wobei eine relativ hoher magnetischer Fluss realisiert werden kann.

Eine vorteilhafte Ausführung ist, dass ein Rotormagnet sich an dem Rotordurchmesser bezüglich der Motorachse über einen Magnetwinkelabschnitt erstreckt, und die Rotormagnete relativ zueinander um einen Polwinkel versetzt angeordnet sind, wobei das Verhältnis des Magnetwinkelabschnitts zum Polwinkel zwischen 0,65 und 0,75 beträgt. Dadurch kann ein optimierter Magnetabstand zwischen den Rotormagneten in Umfangsrichtung realisiert werden, was vorteilhaft für eine kompakte Bauweise ist.

Es ist bevorzugt möglich, dass die Polzahl 8 oder 10 beträgt. Die Polzahl ist durch die Anzahl der über den Umfang verteilten Rotormagnete gegeben. Dabei kann durch eine hohe Polzahl das Motormoment vergleichmäßigt und die Laufruhe verbessert werde, wobei jedoch der Fertigungsaufwand hoch ist. Umgekehrt ist eine geringe Polzahl mit geringerem Aufwand realisierbar, allerdings bei geringerer Laufruhe und ungleichmäßigerem Motormoment. Es hat sich herausgestellt, dass die erfindungsgemäße Polzahl optimal für den Einsatz in der Bremsvorrichtung ist.

Es ist vorteilhaft, dass die Anzahl der Statorzähne 6 oder 9 beträgt. Die Anzahl der Statorzähne ist ein Vielfaches der Anzahl der Phasen des Stroms zur Motorbestromung. Vorteilhaft für den Einsatz in einer Bremsvorrichtung ist eine Kombination von 6 Statorzähnen mit 8 Rotormagneten, und besonders vorteilhaft eine Kombination von 9 Statorzähnen mit 10 Rotormagneten.

Es ist vorteilhaft, dass das Verhältnis zwischen dem Statoraußendurchmesser und dem Statorinnendurchmesser zwischen 0,55 und 0,65 beträgt. Dadurch können optimierte magnetische Eigenschaften in einem kompakten Aufbau realisiert werden.

Eine vorteilhafte Ausführung kann vorsehen, dass das Verhältnis zwischen der Luftspaltbreite und dem Statorinnendurchmesser zwischen 0,015 und 0,03 beträgt. Dieses Verhältnis ist vorteilhaft im Hinblick auf eine hohe Effizienz und einen kompakten Aufbau.

Die Erfindung umfasst weiter eine elektromechanischen Bremsvorrichtung für ein Kraftfahrzeug, umfassend einen Antriebsträger, an dem ein elektrischer Motor und eine Stellvorrichtung angebracht ist, die mit einer Motorwelle getriebemäßig gekuppelt ist und von der ein Bremsteil verstellbar ist, wobei der Motor ein Motorgehäuse aufweist, in dem die in axialer Richtung erstreckte Motorwelle in einem stirnseitigen Lagerdeckel gelagert ist und von diesem axial vorsteht, wobei das Motorgehäuse an dem Antriebsträger fixiert ist. Dabei kann bevorzugt vorgesehen sein, dass der Antriebsträger eine Ausnehmung aufweist, in der das Motorgehäuse in axialer und radialer Richtung formschlüssig aufnehmbar ist, wobei das Motorgehäuse stirnseitig gegen eine axiale Stützfläche der Ausnehmung verspannbar ist.

Die Ausnehmung stellt eine Aufnahme für den Motor bereit, in welcher das Motorgehäuse axial und radial definiert relativ zum Antriebsträger ausgerichtet definiert aufgenommen werden kann. Die Ausnehmung weist eine durch den Antriebsträger durchgehende Öffnung auf, durch welche die Motorwelle senkrecht durch den Antriebsträger durchgeführt ist.

Die Stützfläche kann an einem radial nach innen in die Öffnung der Ausnehmung vorspringenden Stützvorsprung ausgebildet sein, beispielsweise an einer am Rand der Öffnung angeordneten Stufe oder dergleichen. Der offene Querschnitt der Ausnehmung ist derart auf den Außenquerschnitt des Motorgehäuses abgestimmt, so dass dieses mit geringem radialen Spiel axial - in Richtung der durch die Motorwelle definierten Motorachse definitionsgemäß nach vorn - in die Ausnehmung eingeführt werden kann, bis es axial gegen die Stützfläche anschlägt. Dabei ragt die Motorwelle auf der dem Motor abgewandten Seite des Antriebsträgers hervor.

Der auf der vorderen Stirnseite des Motorgehäuses angeordnete Lagerdeckel kann gegen die Stützfläche abgestützt und mit dem Motorgehäuse verspannt werden.

Ein Vorteil ist, dass das Motorgehäuse beim Einsetzen in der Ausnehmung in radialer Richtung formschlüssig gehalten ist und dabei beim Anschlag gegen die Stützfläche auch in axialer Richtung formschlüssig abgestützt ist. Somit ist der in der Ausnehmung aufgenommene Motor relativ zum Antriebsträger räumlich definiert positioniert. Eine Verspannung zur Fixierung des Motors kann nach dem Einsetzen in die Ausnehmung erfolgen. Dadurch wird die Montage in vorteilhafter Weise vereinfacht und es kann einfach ein definierter Getriebeeingriff mit der Stellvorrichtung bereitgestellt, beispielsweise über miteinander in Eingriff stehende Getrieberäder der Motorwelle und der Stelleinrichtung.

Es ist möglich, dass die Stützfläche an einem in der Ausnehmung radial nach innen vorspringenden Vorsprung ausgebildet ist. Der Vorsprung kann bevorzugt eine innen in der Ausnehmung zumindest über einen Teil des Umfangs umlaufende Stufe oder dergleichen aufweisen, an der die Stützfläche parallel zur flächigen Erstreckung eines Montageabschnitts des Antriebsträgers ausgebildet ist.

Es ist bevorzugt, dass der Lagerdeckel stirnseitig an dem Motorgehäuse angebracht ist. Der Lagerdeckel kann dabei zunächst als separates Teil bereitgestellt und beim Zusammenbau nach dem Einsetzen des Rotors mit der Motorwelle mit dem Motorgehäuse zusammengefügt werden. Dadurch wird eine rationelle Montage des Motors ermöglicht.

Es kann vorgesehen sein, dass der Lagerdeckel axial gegen die Stützfläche abgestützt ist.

Der axial vorne an dem Motorgehäuse angebrachte Lagerdeckel kann mit seiner vorderen, von dem Motorgehäuse abgewandten Stirnseite gegen die Stützfläche anliegen. Auf seiner der Stirnseite axial abgewandten Rückseite ist der Lagerdeckel mit dem Motorgehäuse verbunden.

Es ist vorteilhaft, dass der Lagerdeckel zwischen der Stützfläche und dem Motorgehäuse verspannbar ist. Dabei weist der Lagerdeckel zumindest einen Abschnitt auf, der axial zwischen dem Motorgehäuse und der Stützfläche angeordnet ist. Somit kann der Lagerdeckel axial gegen dadurch gegen das Motorgehäuse verspannt werden, dass dieses gegen die Stützfläche verspannt wird. Mit anderen Worten befindet sich der Lagerdeckel zumindest abschnittweise im Kraftfluss der Verspannung des Motorgehäuses mit dem Antriebsträger. Dadurch kann die Fixierung des Motors mit dem Antriebsträger und die Fixierung des Lagerdeckels an dem Motorgehäuse beim Verspannen in einem einzigen Montageschritt erfolgen, so dass der Aufwand in vorteilhafter Weise reduziert wird.

Beispielsweise kann der Lagerdeckel einen axialen Ansatz aufweisen, der in eine axiale Öffnung des Motorgehäuses eingesetzt ist, und einen umlaufenden Kragen, der radial nach außen über den Querschnitt der Öffnung vorsteht. Der Kragen kann im Wesentlichen denselben Außenquerschnitt wie das Motorgehäuse aufweisen, und ist axial zwischen der Stützfläche und dem Motorgehäuse angeordnet. Beim Verspannen des Motorgehäuses gegen die Stützfläche kann dadurch der Lagerdeckel gleichzeitig an der Stützfläche abgestützt und an dem Motorgehäuse festgelegt werden. Ein Vorteil dabei ist, dass der Lagerdeckel vor dem Einbau des Motors in die Bremsvorrichtung lediglich provisorisch mit dem Motorgehäuse verbunden werden muss, und die endgültige Fixierung in einem Montageschritt beim Verspannen des Motors mit dem Antriebsträger erfolgen kann. Die Verspannung erfüllt somit eine doppelte Funktion der Fixierung des Motors mit dem Antriebsträger und der Fixierung des Lagerdeckels am Motorgehäuse. Beispielsweise kann der Lagerdeckel mit einem axialen Ansatz in das Motorgehäuse lediglich kraftschlüssig eingesteckt oder auf das Motorgehäuse aufgesteckt werden. Dadurch können aufwendige Schraub-, Schweiß oder sonstige Fügeverbindungen zwischen dem Lagerdeckel und dem Motorgehäuse wegfallen, so dass der Aufbau des Motors vereinfacht wird, und Gewicht eingespart werden kann.

Es kann bevorzugt vorgesehen sein, dass das Motorgehäuse ein Flanschelement aufweist, welches von der Stirnseite axial beabstandet ist und radial über die Ausnehmung übersteht.

Das Flanschelement ragt von dem Motorgehäuse radial nach außen und steht dabei über die Ausnehmung vor. Es ist mit dem Antriebsträger verbindbar. Hierzu können Befestigungsmittel vorgesehen sein, die außerhalb der Ausnehmung mit dem Antriebsträger verbunden werden können, um das Motorgehäuse axial gegen eine Außenseite des Bremsengehäuses zu verspannen. Beispielsweise können in dem Flanschelement bevorzugt mehrere axiale Flanschbohrungen über den Umfang verteilt vorgesehen sein, durch die Befestigungselemente wie Schrauben oder dergleichen hindurchgeführt und in korrespondierende Gewindebohrungen in dem Antriebsträger eingeschraubt werden können. Dadurch, dass das Flanschelement einen axialen Abstand zur vorderen Stirnseite des Lagerdeckels hat, kann durch die axiale Verspannung des Flanschelements gegen den Antriebsträger das in die Ausnehmung eintauchende Motorgehäuse mit dem Lagerdeckel stirnseitig gegen die in der Ausnehmung angeordnete Stützfläche verspannt werden. Auf diese Weise kann durch das Flanschelement der Motor in der durch die Ausnehmung definierten Position an dem Antriebsträger fixiert werden, und gleichzeitig kann dadurch der Lagerdeckel mit dem Motorgehäuse verspannt und fest verbunden werden.

Der axiale Abstand des Flanschelements von der Stirnseite des stirnseitig vorn an dem Motorgehäuse angebrachten Lagerdeckels ist bevorzugt größer als die Tiefe der Ausnehmung, gemessen von der Stützfläche bis zur Außenseite des Antriebsträger im Bereich des Flanschelements. Dadurch kann der Lagerdeckel durch Verspannen des Flanschelements axial zwischen der Stützfläche und dem Motorgehäuse eingespannt. Der Vorteil ist, dass der Lagerdeckel durch die Verbindung des Motorgehäuses mit dem Antriebgehäuse ohne zusätzliche Verbindungsmittel sicher mit dem Motorgehäuse verbunden werden kann. Dadurch kann der Motor einfacher und leichter ausgebildet sein.

Es kann vorgesehen sein, dass das Motorgehäuse zumindest teilweise einen Hohlquerschnitt aufweist, an dem der Lagerdeckel formschlüssig festlegbar ist. Das Motorgehäuse kann beispielsweise topf- oder becherförmig ausgebildet und durch den darauf angebrachten Lagerdeckel axial vorn verschlossen sein. Die den Rotor aufweisende Motorwelle kann in einem Endbereich innen in dem Motorgehäuse gelagert sein, und mit ihrem anderen Endbereich in dem Lagerdeckel drehbar gelagert und durch diesen nach außen hindurchgeführt sein. Der Hohlquerschnitt kann beispielsweise einen im Wesentlichen zylindrischen Rohrabschnitt aufweisen, aus dessen offener Stirnseite der Lagerdeckel durch axiale Verspannung festlegbar ist. Es kann beispielsweise ein zylindrischer Ansatz des Lagerdeckels formschlüssig in die Öffnung des Hohlquerschnitts eingesteckt sein, und ein im Wesentlichen ringförmiger Kragen kann in der vorangehend beschriebenen Weise zwischen der Stützfläche und der Stirnseite des Rohrabschnitts eingespannt sein.

Es kann vorteilhaft sein, dass das Motorgehäuse, der Lagerdeckel und/oder der Antriebsträger ein Gussteil aufweisen. Das Gussteil kann ein Spritzgussteil aus einem thermoplastischen Kunststoff sein, der gegebenenfalls zur Erhöhung der Festigkeit faserverstärkt sein kann, oder ein Druckgussteil aus einem metallischen Werkstoff, beispielsweise aus Aluminium-, Magnesium- oder Zinklegierungen. Im Gussverfahren können komplexe Formgebungen rationell realisiert werden. Beispielsweise können die erfindungsgemäße Ausnehmung und gegebenenfalls weitere Funktionselemente einstückig an dem Antriebsträger angeformt sein. Entsprechend können an dem Motorgehäuse das Flanschelement und gegebenenfalls weitere Funktionselemente einstückig angeformt sein. An dem Lagerdeckel können beispielsweise ein Ansatz zur Verbindung mit dem Motorgehäuse, eine Lageraufnahme für die Motorwelle oder dergleichen einstückig angeformt sein.

Es ist möglich, dass zwischen der Ausnehmung und dem Motorgehäuse ein elastisches Halteelement und/oder Dichtelement angeordnet ist. Beispielsweise kann ein elastisch verformbarer O-Ring aus einem Gummi- oder Polymerwerkstoff radial zwischen einer umlaufenden Innenfläche der Ausnehmung und einer Außenfläche des Motorgehäuses eingeklemmt sein. Dadurch kann das Motorgehäuse durch einfaches axiales Einstecken in die Ausnehmung bereits vorläufig kraft- oder reibschlüssig an dem Antriebsträger in Position gehalten werden, wodurch die nachfolgende Verspannung vereinfacht werden kann. Es kann vorteilhaft vorgesehen sein, dass ein O-Ring in einer über den Umfang umlaufenden Nut der Ausnehmung oder des Motorgehäuses aufgenommen und dadurch formschlüssig in axialer Richtung gehalten ist.

Außerdem kann durch einen O-Ring oder ein anderes elastisches Dichtelement das Motorgehäuse in der Ausnehmung wirksam gegen Eindringen von Feuchtigkeit oder Verunreinigungen abgedichtet werden.

Bevorzugt kann vorgesehen sein, dass der Antriebsträger mindestens zwei Ausnehmungen aufweist. In jeder der Ausnehmungen kann ein Motor fixiert sein, der jeweils einen Stelltrieb der Stellvorrichtung antreiben kann. Dadurch ist es möglich, zwei Motoren zum Antrieb von zwei Stelltrieben der Stellvorrichtung an dem Antriebsträger zu montieren. Vorteilhaft ist dabei, dass erfindungsgemäß beide Motoren relativ zu den Stelltreiben einfach und sicher positioniert und montiert werden können.

Eine vorteilhafte Ausführung kann vorsehen, dass die Bremsvorrichtung eine Stellvorrichtung und ein damit verbundenes Bremsteil umfasst, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Kupplungsvorrichtung angeordnet ist.

Die Stellvorrichtung ist von mindestens einem elektrischen Stellmotor antreibbar. Dieser steht bevorzugt mit mindestens einem Antriebsrad in Getriebeeingriff. Vorzugsweise kann für das erste und zweite Antriebsrad jeweils ein Stellmotor vorgesehen sein. Der oder die Stellmotoren sind erfindungsgemäß von einer der Bremsvorrichtung zugeordneten Radbremsensteuereinheit ansteuerbar.

Es kann vorgesehen sein, dass die Kupplungsvorrichtung als Reibkupplung ausgebildet ist mit einem Reibelement, dass im Kupplungseingriff reibschlüssig mit einem Gegenreibelement verbindbar ist.

Im Folgenden werden das erste und das zweite Antriebsrad zusammen auch als die beiden Antriebsräder oder kurz als die Antriebsräder bezeichnet.

Die Antriebsräder können jeweils als Zahnrad, beispielsweise als Stirnrad, oder aus als Riemen- oder Zahnriemenrad oder Schneckenrad ausgebildet sein, so dass generell ein Getrieberad zur Verfügung gestellt wird, über das ein Antriebsmoment von einem elektrischen Stellmotor in den Stelltrieb eingekoppelt werden kann.

Zwischen den Antriebsrädern ist eine Reibkupplung realisiert. Diese umfasst ein Reibelement, welches mit dem einen der Antriebsräder drehmomentschlüssig verbunden ist, und ein damit korrespondierendes Gegenreibelement, welches mit dem jeweils anderen Antriebsrad drehmomentschlüssig verbunden ist. Das Reibelement kann mit dem Gegenreibelement in jeder beliebigen relativen Winkelstellung in reibschlüssigen Kupplungseingriff gebracht werden. Dabei wird eine rein kraftschlüssige Kupplung realisiert, im Unterschied zu einer formschlüssigen Rastverbindung. Dadurch kann die relative Stellung der Antriebsräder zueinander kontinuierlich vorgegeben werden, im Gegensatz zu den diskreten Raststufen einer Rastverbindung. Entsprechend ist eine gleichmäßige, kontinuierliche Verstellung des zweiten Stelltriebs relativ zum ersten Stelltreib ermöglicht, und es kann eine kontinuierliche Justierung des Luftspalts erfolgen. Dies ist besonders vorteilhaft im Hinblick auf eine gleichmäßige Nachführung des optimalen Arbeitspunkts der Bremsvorrichtung an die kontinuierliche Abnutzung des Bremsteils im Betrieb, d.h. dem kontinuierlichen Verschleiß des Bremsbelags. Verglichen mit einer nur stufenweisen Justiermöglichkeit kann ein durchgehend verbessertes Ansprechverhalten der Bremsvorrichtung realisiert werden, und damit eine erhöhte Betriebssicherheit und ein höherer Bedienkomfort.

Ein weiterer Vorteil gegenüber einer Rastkupplung ist, dass zum Betätigen und Lösen der Kupplungsvorrichtung im Wesentlichen keine axiale Relativbewegung zwischen den im Kupplungseingriff stehenden Kupplungselementen erforderlich ist, beispielsweise zwischen den Antriebsrädern oder den Rastelementen, die zum Erzeugen und Lösen des rastbaren Formschlusses zwangsläufig zueinander bewegbar sein müssen. Dagegen kann der reine Kraftschluss zwischen dem erfindungsgemäßen Reib- und Gegenreibelement einfach durch die angelegte axiale Betätigungskraft vorgegeben werden, wobei Reib- und Gegenreibelement nicht axial relativ zueinander bewegt werden müssen. Dadurch wird eine einfachere und zuverlässigere konstruktive Gestaltung der Kupplungsvorrichtung ermöglicht.

Es ist bevorzugt vorgesehen, dass die Reibkupplung ein definiert vorgebbares Kupplungsmoment aufweist. Das Kupplungsmoment gibt das maximale Differenzmoment an, welches durch den Reibschluss im Kupplungseingriff kraftschlüssig zwischen Reibelement und Gegenreibelement übertragen werden kann. Beim Überschreiten des Kupplungsmoments rutscht die Kupplungsvorrichtung durch, so dass die beiden Antriebsräder relativ zueinander verdreht werden. Ein Vorteil dabei ist, dass die erfindungsgemäße Reibkupplung kontinuierlich gleitend durchrutscht, so dass eine verbesserte, gleichmäßige Nachjustierung des Luftspalts ermöglich wird. Darüber hinaus müssen keine axialen Ausweichbewegungen von Rastelementen wie bei der bekannten Rastkupplung konstruktiv berücksichtigt und abgefangen werden.

Es ist vorteilhaft, dass das Reibelement und das Gegenreibelement koaxial angeordnet sind. Dabei korrespondiert die koaxiale Anordnung mit der koaxialen Anordnung der Antriebsräder. Das Reibelement und das Gegenreibelement können konstruktiv einfach und in einer kompakten Bauform im Bereich der axial gegeneinander gerichteten Stirnseiten der Antriebsräder angeordnet sein. Durch die vorangehend beschriebene Erzeugung des reinen Kraftschlusses der Kupplung sind keinerlei bewegliche Teile erforderlich.

In einer vorteilhaften Ausführung kann vorgesehen sein, dass das Reibelement und das Gegenreibelement konisch ausgebildet sind. Das Reibelement kann dabei einen zumindest abschnittweise in der axialen Verstellrichtung zusammenlaufenden Kegelabschnitt mit einer konischen Reibfläche aufweisen, der als Außenkonus oder Innenkonus ausgebildet sein kann, und der mit einem korrespondierenden Kegelabschnitt am Gegenreibelement, der entsprechend gegensinnig als Innenkonus oder Außenkonus ausgestaltet ist und eine konische Gegenreibfläche aufweist. Zur Erzeugung des Kupplungseingriffs taucht der Außenkonus in den Innenkonus ein, wobei die konischen Reib- und Gegenreibflächen durch eine axiale Betätigungskraft der Kupplung reibschlüssig gegeneinander belastet werden. Ein Vorteil dabei ist, dass durch den Konus eine Kraftübersetzung der axial einwirkenden Betätigungskraft der Kupplung in die zwischen den konischen Reibflächen im Reibkontakt wirkende Normalkraft erfolgen kann. So kann durch eine flachere Steigung eine relativ kleine axiale Betätigungskraft in eine größere Normalkraft im Reibkontakt umgesetzt werden, wodurch bereits durch eine relativ kleine axiale Betätigungskraft der Kupplung ein hohes Kupplungsmoment realisierbar ist.

Alternativ oder zusätzlich zu der vorgenannten Ausführung kann vorgesehen sein, dass das Reibelement und das Gegenreibelement planar ausgebildet sind. Dabei sind die miteinander korrespondierenden Reibflächen zumindest abschnittweise als plane Axialflächen ausgebildet, ähnlich einer Scheibenkupplung. Es wird eine bauraumsparende Anordnung ermöglicht, insbesondere wenn nur ein relativ kleines Kupplungsmoment realisiert werden soll.

Es kann bevorzugt vorgesehen sein, dass das Reibelement und das Gegenreibelement gegeneinander vorgespannt sind. Bevorzugt sind das Reibelement und das Gegenreibelement elastisch bzw. federnd gegeneinander vorgespannt. Dabei werden die Reib- und Gegenreibflächen mit einer vorgegebenen axialen Vorspannkraft im Reibschluss gegeneinander angepresst. Zur Erzeugung der Vorspannkraft kann bevorzugt ein elastisches Vorspannelement vorgesehen sein, beispielsweise ein Federelement oder dergleichen. Das Kupplungsmoment der Reibkupplung wird durch die senkrecht zum Reibkontakt wirkende Betätigungskraft bestimmt, also die axial zwischen Reib- und Gegenreibelement aufgebrachte Kraft, wobei das Kupplungsmoment umso größer ist, je größer die Vorspannkraft ist. Dies eröffnet die vorteilhafte Möglichkeit, das Kupplungsmoment einfach durch die durch das Vorspannelement ausgeübte Vorspannkraft vorzugeben. Beispielsweise kann bei einem in axialer Richtung druckelastischen Federelement, wie einer Druckfeder, die ausgeübte Vorspannkraft einfach durch der Federkonstante und die Kompression der Feder vorgegeben und angepasst werden.

Die vorgenannte Ausführungsform kann in vorteilhafter Weise dadurch realisiert sein, dass das Reibelement und/oder das Gegenreibelement axial verlagerbar und über ein axial wirksames Federelement gegen das erste Antriebsrad oder das zweite Antriebsrad abgestützt ist. Das Reibelement oder das Gegenreibelement sind dabei drehmomentschlüssig, und axial verlagerbar mit dem einen Antriebsrad verbunden, beispielsweise über radial vorstehende, einen in Umfangsrichtung wirksamen Formschluss erzeugende Mitnehmer. Das zwischen dem Reibelement oder dem Gegenreibelement und dem einen Antriebsrad axial eingespannte Federelement, welches bevorzugt als axial wirksame Druckfeder ausgebildet ist, sorgt dafür, dass das Reib- oder Gegenreibelement axial gegen das korrespondierende, an dem anderen Antriebsrad axial abgestützte Gegenreib- oder Reibelement vorgespannt, d.h. axial im Reibkontakt dagegen angepresst wird. Das korrespondierende Gegenreib- oder Reibelement ist drehschlüssig mit dem jeweils anderen Antriebsrad verbunden. Es ist auch möglich, dass alternativ oder zusätzlich das Gegenreibelement über ein Federelement an einem der Antriebsräder abgestützt ist. Ein Vorteil dieser Anordnung ist, dass diese Reibkupplung konstruktiv einfach und bauraumsparend zwischen den Antriebsrädern eingegliedert werden kann.

In einer vorteilhaften Weiterbildung ist es möglich, dass das Reibelement und/oder das Gegenreibelement in dem ersten Antriebsrad oder dem zweiten Antriebsrad angeordnet ist. So ist es beispielsweise möglich, das eine Antriebsrad im Wesentlichen trommelförmig zu gestalten, so dass in einem von dem umlaufenden Zahnrad oder Zahnkranz umschlossenen Innenraum das Reib- oder Gegenreibelement angeordnet sein kann. Dadurch wird eine kompakte, gegen äußere Einflüsse geschützte Bauform ermöglicht. So kann beispielsweise das Antriebsrad des ersten Stelltriebs ein konisches Reibelement aufweisen, welches axial in ein als Innenkonus ausgebildetes Gegenreibelement eingreift, das zumindest teilweise innerhalb des zweiten Antriebsrads angeordnet ist.

Eine besonders kompakte Bauform kann - insbesondere bei der zuletzt genannten Ausführung - dadurch realisiert sein, dass die Antriebsräder innerhalb der axialen Erstreckung der Stelltriebe angeordnet sind, also nicht einseitig axial vorstehend angebracht sind.

Es ist bevorzugt, dass das Reibelement und/oder das Gegenreibelement einen Reibbelag aufweisen. Das Reib- und Gegenreibelement weisen bevorzugt einen metallischen Grundkörper auf, beispielsweise aus Stahl. Zur Vermeidung von Metall-Metall-Kontakt kann bevorzugt eine Beschichtung oder ein Belag zur Erzeugung einer Reibpaarung mit einer definierten Reibkraft aufgebracht sein, beispielsweise aus Sinter-, Metall- und/oder Keramikreibwerkstoffen, Verbundwerkstoffen oder dergleichen. Dadurch kann ein definiertes, reproduzierbares Kupplungsmoment gewährleistet werden.

Es kann vorgesehen sein, dass ein Stelltrieb einen Spindeltrieb aufweist. Dabei greift in an sich bekannter Weise eine Gewindespindel in eine Spindelmutter ein, und ein relativer drehender Antrieb über ein mit der Gewindespindel oder der Spindelmutter verbundenes Antriebsrad. Es ist möglich, dass die Spindelmutter das antriebsseitige Antriebselement des Stelltriebs bildet, und die Gewindespindel das relativ dazu linear verstellbare, ausgangsseitige Abtriebselement, oder umgekehrt.

Es ist möglich, dass ein Stelltrieb eine Kugelrampenanordnung, Keilscheibenanordnung, oder eine Kippstiftanordnung aufweist. Bei einer Kugelrampenanordnung, auch als Rampenlager bezeichnet, weisen das Antriebs- und Abtriebselement bevorzugt Kurvenscheiben mit gegen die Achse geneigten Laufbahnen oder Rampen auf, zwischen denen in Umfangsrichtung abwälzbare Kugeln angeordnet sind. Eine relative Drehung führt durch die dabei auf den Rampen abrollenden Kugel dazu, dass das Abtriebselement relativ zum Antriebselement axial verlagert wird. Bei einer an sich bekannten Kippstiftanordnung sind Kippstifte derart zwischen Antriebs- und Abtriebselement angeordnet und jeweils in Umfangsrichtung abgestützt, dass sie bei einer relative Drehung je nach Drehrichtung stärker oder schwächer gegen die Achse geneigt sind, wodurch der Abstand zwischen Antriebs- und Abtriebselement ebenfalls verstellbar ist.

In der Stellvorrichtung können zwei gleichartig wirkende Stelltriebe als erste und zweite Stelltriebe miteinander kombiniert sein, beispielsweise zwei Spindeltriebe. Es ist auch möglich, zwei unterschiedliche Bauarten miteinander zu kombinieren, beispielsweise eine Kugelrampenanordnung als ersten Stelltrieb, und einen Spindeltrieb als zweiten Stelltrieb zur Justierung des Luftspalts. Dabei können die jeweiligen charakteristischen Eigenschaften jeder Bauform optimal ausgenutzt werden. Beispielsweise kann mit einer Kugelrampenanordnung mit geringem Aufwand eine nichtlineare Verstellcharakteristik realisiert werden, und/oder zumindest abschnittweise selbsthemmende Eigenschaften, und/oder eine definierte Totpunkt- oder Strecklage, die einen definierten Verstellweg ermöglicht. Die Realisierung der genannten positiven Eigenschaften kann zumindest teilweise eine präzise Vorgabe des Luftspalts erfordern, was mit der erfindungsgemäßen Reibkupplung problemlos realisiert werden kann.

Eine erfindungsgemäße Bremsvorrichtung kann eine Stellvorrichtung und ein damit verbundenes Bremsteil umfassen, das von der Stellvorrichtung entlang einer Achse verstellbar und mit einem Gegenbremsteil in Bremseingriff bringbar ist, wobei die Stellvorrichtung einen ersten Stelltrieb und einen seriell damit gekoppelten zweiten Stelltrieb aufweist, wobei der erste Stelltrieb ein drehend antreibbares erstes Antriebsrad aufweist, und der zweite Stelltrieb ein drehend antreibbares, zu dem ersten Antriebsrad koaxiales zweites Antriebsrad aufweist, wobei zwischen dem ersten Antriebsrad und dem zweiten Antriebsrad eine Kupplungsvorrichtung angeordnet ist.

Die Stellvorrichtung ist von mindestens einem elektrischen Stellmotor antreibbar. Dieser steht bevorzugt mit mindestens einem Antriebsrad in Getriebeeingriff. Vorzugsweise kann für das erste und zweite Antriebsrad jeweils ein Stellmotor vorgesehen sein. Der oder die Stellmotoren sind erfindungsgemäß von einer der Bremsvorrichtung zugeordneten Radbremsensteuereinheit ansteuerbar.

In der zuletzt genannten Ausführung der Bremsvorrichtung kann bevorzugt vorgesehen sein, dass die Kupplungsvorrichtung als Reibkupplung ausgebildet ist mit einem Reibelement, dass im Kupplungseingriff reibschlüssig mit einem Gegenreibelement verbindbar ist.

Dadurch sind die vorangehend im Zusammenhang mit dem Bremssystem erläuterten Vorteile realisierbar.

Zur Realisierung des erfindungsgemäßen Verfahrens kann vorgesehen sein, dass die Bremsvorrichtung eine mit einem Stellmotor kuppelbare Stellvorrichtung umfassend einen ersten Stelltrieb und einen seriell damit gekoppelten zweiten Stelltrieb aufweist, und welche auf ein Bremsteil wirkt, das in Richtung einer Achse mit einem Gegenbremsteil in Bremseingriff bringbar ist, wobei der erste Stelltrieb ein drehend antreibbares erstes Antriebsrad aufweist, auf das zur Betätigung ein erstes Antriebsmoment aufgebacht werden kann, und der zweite Stelltrieb ein drehend antreibbares, zu dem ersten Antriebsrad koaxiales zweites Antriebsrad aufweist, auf das zur Betätigung ein zweites Antriebsmoment aufgebracht werden kann, wobei zwischen dem ersten Antriebsrad und dem zweiten Antriebsrad eine Kupplungsvorrichtung angeordnet ist, wobei erfindungsgemäß vorgesehen ist, dass die Kupplungsvorrichtung als Reibkupplung ausgebildet ist und ein vorgebbares Kupplungsmoment aufweist, bei dessen Überschreiten das erste Antriebsrad relativ zum zweiten Antriebsrad gleitend durchrutscht, wobei zur Betätigung des ersten Stelltriebs das erste Antriebsrad und das zweite Antriebsrad synchron angetrieben werden, so dass der zweite Stelltrieb unbetätigt bleibt, und zur Betätigung des zweiten Stelltriebs das zweite Antriebsrad angetrieben wird, und das erste Antriebsrad relativ dazu stillgesetzt wird, so dass die Reibkupplung durchrutscht und der erste Stelltrieb unbetätigt bleibt.

Die vorangehend im Zusammenhang mit der erfindungsgemäßen Bremsvorrichtung genannten Merkmale können einzeln und in Kombinationen zur Umsetzung des erfindungsgemäßen Verfahrens genutzt werden.

Zur Verstellung des ersten Stelltriebs kann mittels eines ersten elektrischen Stellmotors ein Stellmoment in das erste Antriebsrad eingekoppelt werden, und entsprechend kann der zweite Stelltrieb durch einen zweiten elektrischen Stellmotor angetrieben werden.

Im normalen Bremsbetrieb werden das erste und das zweite Antriebsrad synchron rotiert. Dies kann zum einen dadurch erfolgen, dass das erste und zweite Antriebsrad von den ersten und zweiten Stellmotoren mit synchronisierten Antriebsmomenten angetrieben werden. Zum anderen kann das zweite Antriebsrad beim Antrieb des ersten Antriebsrads durch die Kupplungsvorrichtung synchron mitgenommen werden, solange das übertragene Antriebsmoment unterhalb des Kupplungsmoments bleibt. In diesem Betriebsmodus bleibt der zweite Stelltrieb unbetätigt, und dreht als Ganzes zusammen mit dem Bremselement leer mit.

Bei dem Verfahren kann die Kupplungsvorrichtung beim Überschreiten des Kupplungsmoments zur Justierung des Luftspalts kontinuierlich und gleichmäßig gleitend durchrutschen. Dies kann beispielsweise dadurch realisiert werden, dass das Antriebsrad des ersten Stelltriebs festgesetzt wird, beispielsweise durch eine Bremse oder eine entsprechende Ansteuerung des ersten Antriebsmotors, während durch den zweiten Antriebsmotor ein zweites Antriebsmoment auf das zweite Antriebsrad aufgebracht wird, welches größer ist als das Kupplungsmoment. Dadurch wird das zweite Antriebsrad relativ zum ersten Antriebsrad verdreht, und durch Betätigung des zweiten Stelltriebs kann der Luftspalt kontinuierlich und feinfühlig justiert werden, so dass eine kontinuierlich fortschreitende Abnutzung des Bremselements bzw. des Bremsbelags optimal ausgeglichen werden kann.

Es ist möglich, dass das erste Antriebsrad und das zweite Antriebsrad zur Erzeugung eines synchronen Antriebs durch die Reibkupplung drehmomentschlüssig gekuppelt werden.

Dabei ist im kein synchroner Antrieb der beiden Antriebsräder durch die Stellmotoren erforderlich. Eventuelle Drehmomentdifferenzen können innerhalb vorgegebener Toleranzen ausgeglichen werden.

Es kann mit Vorteil vorgesehen sein, dass bei der Betätigung des ersten Stelltriebs ein höheres Kupplungsmoment vorgegeben wird, als bei der Betätigung des zweiten Stelltriebs. Der erste Stelltrieb wird durch synchronen Antrieb des ersten und des zweiten Antriebsrads betätigt. Das Reibelement und das Gegenreibelement werden durch die Federkraft des Federelements gegeneinander vorgespannt, und zusätzlich wirkt entgegengesetzt zur Federkraft die Verstellkraft des ersten Stelltriebs. Dadurch wird ein relativ hohes Kupplungsmoment realisiert. Wird hingegen zur Justierung des Luftspalts nur das zweite Antriebsrad gedreht, so wirkt allein die Federkraft, so dass ein niedrigeres Kupplungsmoment eingestellt wird. Dadurch wird die Justierung des Luftspalts erleichtert.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Bremsvorrichtung in einer schematischen perspektivischen Ansicht,
- Figur 2: eine seitliche Ansicht der Bremsvorrichtung gemäß Figur 1,
- Figur 3: die erfindungsgemäße Stellvorrichtung der Bremsvorrichtung gemäß Figur 1 freigestellt in einer schematischen perspektivischen Ansicht,
- Figur 4: einen Schnitt Q-Q durch die Bremsvorrichtung gemäß Figur 1,
- Figur 5: den ersten Stelltrieb der Bremsvorrichtung gemäß Figur 1 freigestellt in einer schematischen perspektivischen Darstellung,
- Figur 6: eine vergrößerte Detailansicht der Stellvorrichtung aus Figur 4,
- Figur 7: einen Längsschnitt durch einen an dem Antriebsträger der Bremsvorrichtung montierten Motor,
- Figur 8: einen Querschnitt durch einen erfindungsgemäßen Motor gemäß Figur 7,
- Figur 9: einen vergrößerten Querschnitt durch den Rotor des Motors gemäß Figur 8,
- Figur 10a,b,c: Querschnitte durch verschiedene Ausführungen eines Rotormagnets des Motors gemäß Figur 8 oder 9.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

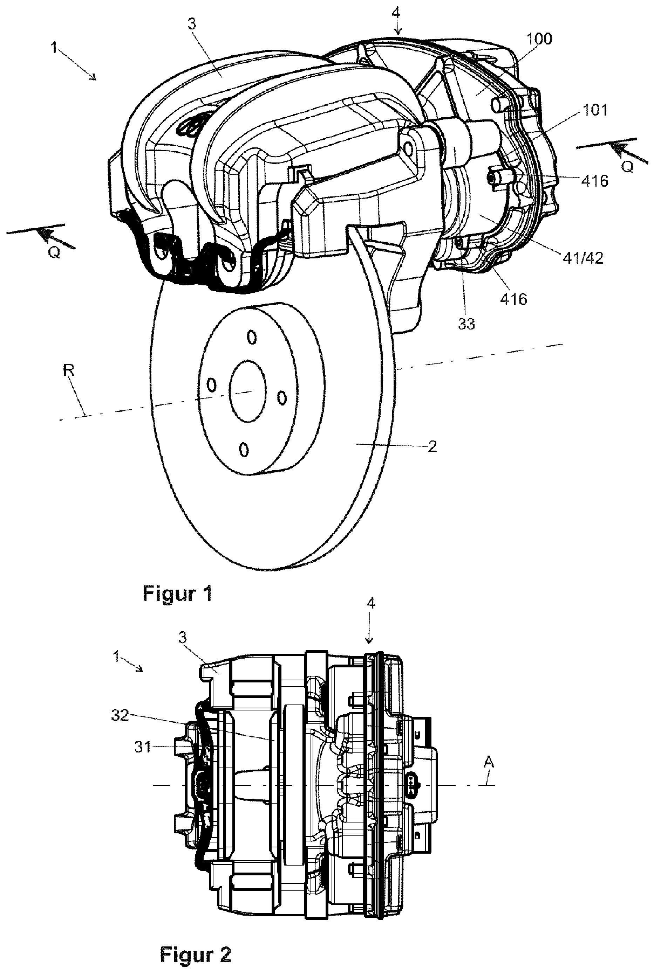

Fig. 1 zeigt eine erfindungsgemäße Bremsvorrichtung als Ganzes, die als Scheibenbremse ausgebildet ist. Diese umfasst eine Bremsscheibe 2, die ein Gegenbremsteil bildet und mit einem hier nicht dargestellten, um eine Radachse R rotierbaren Fahrzeugrad verbunden ist. Ein Bremssattel 3 umgreift die beiden axialen Stirnflächen der Bremsscheibe 2.

Die Bremsscheibe 2 ist hier als unbelüftete Bremscheibe aus Vollmaterial ausgebildet. Alternativ kann diese auch als innenbelüftete Bremsscheibe ausgebildet sein.

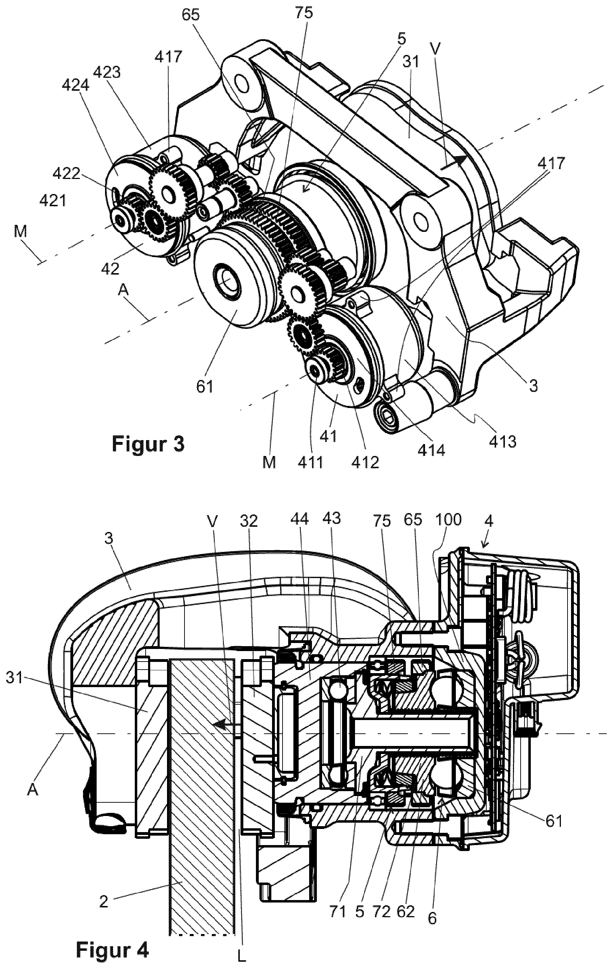

An dem Bremssattel 3 ist ein erfindungsgemäßer elektrischer Bremsaktuator 4 angebracht, die in Figur 3 in einer separaten, freigestellten schematischen perspektivischen Ansicht gezeigt ist, und in den Figuren 4 bis 6 im Detail erläutert wird.

Der Bremsaktuator 4 umfasst eine Stellvorrichtung 5 die sich axial in Richtung einer Achse A erstreckt, welche parallel zur Radachse R liegt und die Verstellrichtung V der Stellvorrichtung 5 angibt.

Wie in der Schnittdarstellung von Figur 4 längs der Achse A erkennbar ist, ist die Bremsscheibe 2 axial zwischen zwei Bremsbelägen 31 und 32 angeordnet. Der eine Bremsbelag 31 ist auf der dem Bremsaktuator 4 abgewandten Seite fest an dem Bremssattel 3 abgestützt. Der andere Bremsbelag 32, der ein Bremsteil im Sinne der Erfindung bildet, ist an der Stellvorrichtung 5 angebracht und von dieser in der durch die Achse A gegebenen, axialen Verstellrichtung V zur Erzeugung des Bremseingriffs auf die Bremsscheibe 2 zu verstellbar, wie in Figur 4 mit dem Pfeil angedeutet ist.

Im unbetätigten Zustand der Bremsvorrichtung 1 befindet sich zwischen der Bremsscheibe 2 und dem verstellbaren Bremsbelag 32 ein axialer Luftspalt L, der in Figur 4 schematisch übertrieben breit eingezeichnet ist.

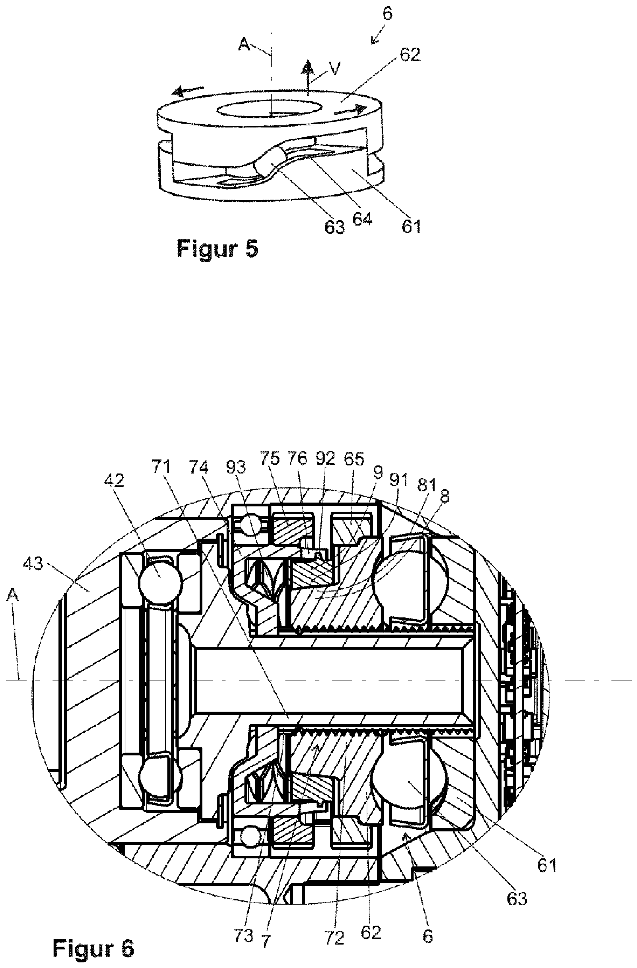

Der Aufbau der Stellvorrichtung 5 ist in Figur 4 und in dem vergrößerten Ausschnitt daraus in Figur 6 dargestellt.

Die Stellvorrichtung 5 umfasst einen ersten Stelltrieb 6, der eine Kugelrampenanordnung, auch als Rampenlager bezeichnet, aufweist, und einen damit axial (bezüglich der Achse A) seriell gekoppelten zweiten Stelltrieb 7, der einen Spindeltrieb aufweist.

Der erste Stelltrieb 6, der im gezeigten Beispiel als Kugelrampenanordnung bzw. Rampenlager ausgebildet ist, umfasst eine axial und drehfest an dem Bremsaktuator 4 abgestützte, antriebseitige Kurvenscheibe 61 und eine abtriebsseitige Kurvenscheibe 62. Zwischen den Kurvenscheiben 61 und 62 sind Kugeln 63 angeordnet. Wie in der schematisch freigestellten Ansicht von Figur 5 erkennbar ist, weisen die Kurvenscheiben 61 und 62 einander axial gegenüberliegende rampenartige, schräg zur Achse A liegende Laufbahnen 64 auf, zwischen denen Kugeln 63 abwälzbar sind. Eine Drehung der abtriebsseitigen Kurvenscheibe 62, in Figur 5 oben, relativ zu der feststehenden antriebsseitigen Kurvenscheibe 61 - wie schematisch mit den gebogenen Pfeilen angedeutet - führt zu einer linearen Verstellung der abtriebsseitigen Kurvenscheibe 62 in der Verstellrichtung V parallel zur Achse A. Dadurch kann der Bremsbelag 32 wie in Figur 4 eingezeichnet durch Betätigung des ersten Stelltriebs 6 in Bremseingriff gebracht werden.

Die Kurvenscheibe 62 ist mit einem koaxialen Zahnrad 65 verbunden, welches als Stirnrad ausgebildet ist und ein Antriebsrad im Sinne der Erfindung bildet.

Das Zahnrad 65 steht im Getriebeeingriff mit einem ersten elektrischen Stellmotor 41, der gleichbedeutend auch kurz als Motor 41 bezeichnet wird. Dieser ermöglicht den drehenden Antrieb der Kurvenscheibe 62 und damit eine Betätigung des ersten Stelltriebs 6.

Der zweite Stelltrieb 7, der im gezeigten Beispiel als Spindeltrieb ausgebildet ist, weist abtriebsseitig eine Gewindespindel 71 auf, die in das Innengewinde einer antriebsseitigen Spindelmutter 72 eingreift. Dieses Innengewinde ist in der abtriebsseitigen Kurvenscheibe 62 des ersten Stelltriebs 6 ausgebildet, so dass das die Funktionen der abtriebsseitigen Kurvenscheibe 62 und der antriebsseitigen Spindelmutter 72 in einem Bauelement vereinigt sind.

Die Gewindespindel 71 ist über ein Nabenteil 74 mit einem koaxialen Zahnrad 75 verbunden, welches axial fixiert in dem Bremsaktuator 4 drehbar gelagert ist. Über Mitnehmer 73, die beispielsweise radial vorstehende Vorsprünge oder Zähne aufweisen können, die in axiale Schlitze des Nabenteils 74 axial verschieblich eingreifen, ist die Gewindespindel drehmomentschlüssig, aber axial verlagerbar mit dem Zahnrad 75 gekuppelt.

Das Zahnrad 75 kann wie das Zahnrad 65 als Stirnrad ausgeführt sein und ist zu diesem benachbart koaxial angeordnet. Dieses Zahnrad 75 steht im Getriebeeingriff mit einem zweiten elektrischen Stellmotor 42, der gleichbedeutend auch kurz als Motor 42 bezeichnet wird. Dieser ermöglicht den drehenden Antrieb der Gewindespindel 71 und damit eine Betätigung des zweiten Stelltriebs 7.

Die Gewindespindel 71 ist über ein Drucklager 43, beispielsweise wie dargestellt ein Axialwälzlager, axial mit einem Druckstück 44 verbunden, an dem der verlagerbare Bremsbelag 32 angebracht ist, wie in Figur 4 erkennbar ist. Das Druckstück 44 kann auch als Kolben bezeichnet werden.

Die Kupplungsvorrichtung weist ein Reibelement 8 auf, welches als koaxialer, konischer Ansatz von der Kurvenscheibe 62 auf den zweiten Stelltrieb 7 zu gerichtet ist. Der konische Ansatz weist eine außen auf einem Außenkonus angeordnete konische Reibfläche 81 auf. Das Reibelement 81 kann bevorzugt einstückig mit der Kurvenscheibe 62 / Spindelmutter 72 ausgebildet sein.

Das Reibelement 8 ist im Kupplungseingriff reibschlüssig mit einem Gegenreibelement 9 gekuppelt. Dabei taucht der konische Ansatz axial in eine korrespondierende konische Öffnung des Gegenreibelements 9 ein, welche eine in einem Innenkonus angeordnete konische Reibfläche 91 aufweist. Im Kupplungseingriff liegen die Reibfläche 81 und die Gegenreibfläche 91 reibschlüssig gegeneinander an, wie in Figur 6 deutlich erkennbar ist.

Das Gegenreibelement 9 ist über Mitnehmer 92, die in korrespondierende Schlitze 76 in dem Nabenteil 74 oder dem Zahnrad 75 axial verschiebbar eingreifen, drehmomentschlüssig, aber axial verlagerbar mit dem Zahnrad 75 gekuppelt.

Zwischen dem Zahnrad 75 oder dem damit verbundenen Nabenteil 74 und dem Gegenreibelement 9 ist ein Federelement 93 angeordnet. Durch dessen axial wirksame Federkraft wird das Gegenreibelement 9 gegen das Reibelement 8 elastisch verspannt. Dadurch wird ein definiertes Kupplungsmoment der durch das Reibelement 8 und das Gegenreibelement 9 gebildeten erfindungsgemäßen Reibkupplung erzeugt.

In Figur 3 ist dargestellt, wie die beiden Motoren 41, 42 und die Stellvorrichtung 5 relativ zum Bremssattel 3 angeordnet sind. Der Antriebsträger 100 ist in dieser Darstellung zur besseren Übersicht weggelassen.

Jeder der Motoren 41, 42 weist eine um eine Motorachse M drehend antreibbare Motorwelle 411, 421 auf, die parallel zur Achse A liegt. Auf dieser ist jeweils ein Zahnrad 412 bzw. 422 angebracht, welches jeweils im Getriebeeingriff mit dem Zahnrad 65 oder 75 der Stellvorrichtung 5 ist.

Jeder Motor 41, 42 weist ein Motorgehäuse 413, 423 auf, welches im gezeigten Beispiel eine zylindrische Grundform hat. Es ist becherförmig ausgebildet und auf seiner in Figur 3 dem Betrachter zugewandten axialen Stirnseite jeweils mittels eines Lagerdeckels 414, 424 geschlossen, wobei die einen Rotor des Motors 41 tragende Motorwelle 411, 412 jeweils in dem Lagerdeckel 414, 424 gelagert ist und axial aus diesem vorsteht.

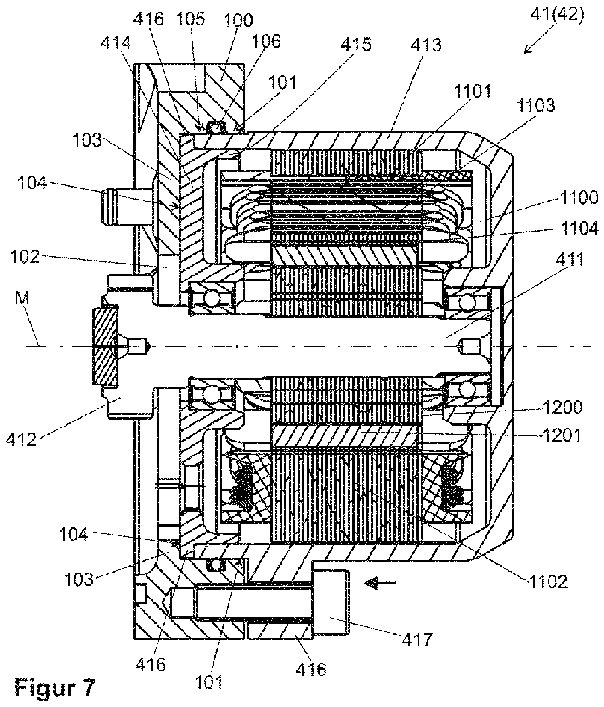

Figur 7 zeigt einen Längsschnitt entlang der Motorachse M durch den Motor 41 bzw. 42, wobei zur besseren Übersichtlichkeit nur die Bezugszeichen für den Motor 41 eingetragen sind, die entsprechend aber auch bei dem anderen Motor 42 vorhanden sind.

Der Antriebsträger 100 weist eine Ausnehmung 101 auf, die eine durch den Antriebsträger 100 hindurchgehende Öffnung 102 umfasst. Ein nach innen radial in den Öffnungsquerschnitt stufenförmig vorstehender Vorsprung 103 weist eine axiale Stützfläche 104 auf, die gegen den Motor 41 gerichtet ist. Die Ausnehmung 101 ist radial nach außen durch eine koaxial zur Motorachse M umlaufende Innenfläche 105 begrenzt.

Die Innenfläche 105 ist derart an den Außendurchmesser des Motorgehäuses 413 angepasst, dass dieses darin axial einsetzbar und dabei radial, d.h. quer zur Motorachse M formschlüssig gehalten und abgestützt ist.

Der Lagerdeckel 414 ist mit einem axialen Ansatz 415 axial von vorn in das Motorgehäuse 413 eingesetzt. Mit seiner vorderen Stirnseite - die definitionsgemäß vorn und in Figur 7 nach links weist - liegt der Lagerdeckel 414 axial gegen die Stützfläche 104 der Ausnehmung 101 an.

Der Lagerdeckel 414 weist weiterhin einen umlaufenden, radial vorstehenden Kragen 416 auf, der axial zwischen dem Motorgehäuse 413 und der Stützfläche 104 angeordnet ist.

Das Motorgehäuse 413 weist radial nach außen über die Ausnehmung 101 vorstehende Flanschelemente 416 mit axial durchgehenden Flanschbohrungen auf, durch die als Befestigungselemente dienende Schrauben 417 hindurchgeführt und in korrespondierende Gewindebohrungen in dem Antriebsträger 100 eingeschraubt sind.

Durch Einschrauben und Festziehen der Schrauben 417 wird das Motorgehäuse 413 an dem Antriebsträger 100 festgelegt und mit diesem verspannt. Dabei wird der Lagerdeckel 414 zusammen mit dem Motorgehäuse 413 axial gegen die Stützfläche 104 (in Figur 7 nach links wie mit dem Pfeil angedeutet) verspannt, und zugleich axial in das Motorgehäuse 413 (in Figur 7 nach rechts) eingepresst und fixiert. Damit haben die Schrauben 417 eine Doppelfunktion zur Festlegung des Motors 41 an dem Antriebsträger 100 und zur Verbindung des Lagerdeckels 414 mit dem Motorgehäuse 413. Dabei sorgen die Stützfläche 104 und die Innenfläche 105 für eine definierte Ausrichtung des Motors 41 relativ zum Antriebsträger 100.

Zwischen dem Motorgehäuse 413 und der Innenfläche 105 kann weiterhin ein O-Ring 106 aus einem elastischen Elastomer- oder Gummimaterial angeordnet sein, beispielsweise wie gezeigt in einer innen in der Innenfläche 105 umlaufenden Nut. Dieser ist dort in radialer Richtung elastisch eingeklemmt und sorgt dafür, dass das Motorgehäuse 413 durch einfaches axiales Einstecken - in Figur 7 in der Pfeilrichtung nach links - in die Ausnehmung 101 reibschlüssig gehalten wird. Außerdem kann damit der Motor 41 gegen den. Antriebsträger 100 abgedichtet werden.

Der Lagerdeckel 414 weist eine Aufnahmeöffnung 418 auf, durch die sich die Motorwelle 411 hindurch erstreckt, wobei zwischen Motorwelle 411 und der Aufnahmeöffnung 418 ein Lager 419 zur drehbaren Lagerung der Motorwelle 411 gegenüber dem Lagerdeckel 414 angeordnet ist, welches als Wälzlager, genauer gesagt als Radialrillenkugellager ausgebildet ist. Die Aufnahmeöffnung 418 weist einen nach innen vorspringenden Schulterabschnitt 418a auf, an den das Lager 419 in Richtung der Motorachse M anliegt und sich an dieser abstützt.

Der in Figur 7 gezeigte Motor 41 weist einen fest in dem Motorgehäuse 413 angeordneten Stator 1100 auf, der ein Blechpaket aufweist, durch das ein radial außen umlaufender, im Wesentlichen hohlzylindrischer Statorkörper 1101 ausgebildet ist, von dem mehere Statorzähne 1102 radial nach innen vorstehen. Aus den Statorzähnen 1102 sind Statorwicklungen 1103 angeordnet.

Auf der Motorwelle 411 ist ein Rotor 1200 drehfest angebracht. Dieser weist insgesamt 10 (zehn) gleichmäßig über den Umfang angebrachte Rotormagnete 1201 auf. Entsprechend ist die Polzahl 10 (zehn).

Zwischen dem Außenumfang des Rotors 1200 und dem Innenumfang des Stators 1100 ist ein umlaufender Luftspalt 1104 ausgebildet.

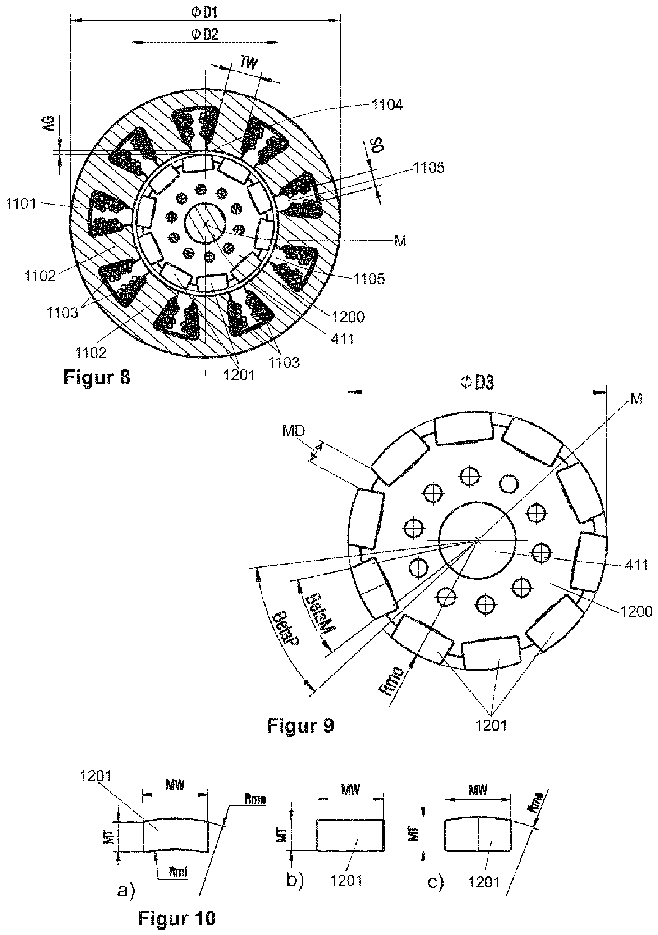

Figur 8 zeigt einen Querschnitt durch den Stator 1100 und den Rotor 1200 des Motors 41.

Der Stator 1100 weist einen Statoraußendurchmesser D1 und einen Statorinnendurchmesser D2 auf.

Der Stator 1100 weist in dem gezeigten Beispiel 9 (neun) Statorzähne 1102 auf. Diese erstrecken sich von dem Rotorkörper 1101 radial nach innen bis zum Rotorinnendurchmesser D2. Außen am Rotorkörper 1102 haben die Rotorzähne 1102 jeweils eine Zahnbreite TW gemessen in Umfangsrichtung. Innen im Bereich des Rotorinnendurchmessers D2 ist zwischen benachbarten Statorzähnen 1102 jeweils ein Statorspalt 1105 ausgebildet, der eine Spaltbreite SO in Umfangsrichtung gemessen aufweist.

Der Rotor 1200 weist einen Rotordurchmesser D3 auf, an den die Rotormagnete 1201 von innen angrenzen.

Aus der Differenz des Statorinnendurchmessers D2 und des Rotordurchmesser D3 ergibt sich die Luftspaltbreite AG = D2 - D3 des Luftspalts 1104.

Figur 9 zeigt eine vergrößerte Ansicht des Rotors 1200 aus Figur 8.

Die Rotormagnete 1201 sind gleichmäßig um einen Polwinkel BetaP versetzt angeordnet, der im Beispiel mit den 10 (zehn) Rotormagneten 1201 einen Betrag von 360° / 10 = 36° hat.

Bezogen auf die Motorachse M erstrecken sich die Rotormagnete 1201 am Rotordurchmesser D3 über einen Magnetwinkel BetaM. Die Differenz der Winkel BetaP-BetaM bestimmt den am Rotordurchmesser D3 in Umfangsrichtung gemessenen Magnetabstand MD.

In den Figuren 10a, b, c sind alternative erfindungsgemäße Querschnitte eines einzelnen Rotormagneten 1201 in der Ansicht von Figur 8 gezeigt.

Gemäß Figur 10b ist der Querschnitt rechteckig mit ebenen Seiten, wobei die Magnetbreite MW beträgt, und die Magnetdicke MT. Diese stehen in dem erfindungsgemäßen Verhältnis zueinander.

Die Ausführung gemäß Figur 10c weist eine ebene Innenseite auf - in der Zeichnung unten - und eine zylindrische Außenseite, die bezogen auf die Motorachse M mit einem Radius Rmo gerundet ist, der dem halben Rotordurchmesser D3 entspricht, wie in Figur 9 erkennbar ist. Die Magnetbreite MW entspricht der Abmessung der ebenen Innenseite in Umfangsrichtung, und die Magnetdicke MT ist senkrecht zu dieser Innenseite gemessen.

Die Ausführung gemäß Figur 10a weist wie die Ausführung gemäß Figur 10c eine zylindrische Außenseite mit einem Radius Rmo auf. Zusätzlich ist die Innenseite koaxial zur Außenseite mit einem entsprechend kleineren Innenradius Rmi zylindrisch gerundet. Die Seitenflächen liegen parallel zueinander und zu einem Durchmesser und erstrecken sich radial über die Magnetdicke MT, so dass der kleinere Innenradius Rmi näherungsweise dem Radius Rmo abzüglich der Magnetdicke MT entspricht.

### Bezugszeichenliste

- 1: Bremsvorrichtung
- 100: Antriebsträger
- 101: Ausnehmung
- 102: Öffnung
- 103: Vorsprung
- 104: Stützfläche
- 105: Innenfläche
- 106: O-Ring
- 1100: Stator
- 1101: Statorkörper
- 1102: Statorzahn
- 1103: Statorwicklung
- 1104: Luftspalt
- 1105: Statorspalt
- 1200: Rotor
- 1201: Rotormagnet
- 2: Bremsscheibe
- 3: Bremssattel
- 31, 32: Bremsbelag
- 33: Befestigungsbolzen
- 4: Bremsaktuator
- 41, 42: Motor (Stellmotor)
- 411, 421: Motorwelle
- 412, 422: Zahnrad
- 413, 423: Motorgehäuse
- 414, 424: Lagerdeckel
- 415, 425: Ansatz
- 416, 426: Flanschelement
- 417, 427: Schraube
- 418: Aufnahmeöffnung
- 418a: Schulterabschnitt
- 419: Lager
- 43: Drucklager
- 44: Druckstück
- 5: Stellvorrichtung
- 6: erster Stelltrieb
- 61: Kurvenscheibe
- 62: Kurvenscheibe (integriert mit Spindelmutter 72)
- 63: Kugel
- 64: Laufbahn
- 65: Zahnrad
- 66: Kugelkäfig
- 67: Vertiefung
- 7: zweiter Stelltrieb
- 71: Gewindespindel
- 72: Spindelmutter (integriert mit Kurvenscheibe 62)
- 73: Mitnehmer
- 74: Nabenteil
- 75: Zahnrad
- 76: Schlitz
- 8: Reibelement
- 81: Reibfläche
- 9: Gegenreibelement
- 91: Gegenreibfläche
- 92: Mitnehmer
- 93: Federelement
- A: Achse
- R: Radachse
- V: Verstellrichtung
- L: Luftspalt
- M: Motorachse
- D1: Statoraußendurchmesser
- D2: Statorinnendurchmesser
- D3: Rotordurchmesser
- TW: Zahnbreite
- AG: Luftspaltbreite
- SO: Spaltbreite
- BetaP: Polwinkel
- BetaM: Magnetwinkel
- MW: Magnetbreite
- MT: Magnetdicke
- MD: Magnetabstand

## Patentansprüche

1. Elektromechanische Bremsvorrichtung (1) für ein Kraftfahrzeug, umfassend eine von mindestens einem elektrischen Motor (41, 42) antreibbare Stellvorrichtung (5), von der ein Bremsteil (22) verstellbar ist,
wobei der Motor (41, 42) einen Stator (1100) und einen darin um eine Motorachse (M) drehbar gelagerten Rotor (1200) aufweist,
wobei der Stator (1100) einen Statoraußendurchmesser (D1) und einen Statorinnendurchmesser (D2) aufweist und eine Anzahl von über den Umfang verteilten, radial nach innen vorstehenden Statorzähnen (1102) umfasst, die in Umfangsrichtung am Statoraußendurchmesser (D1) eine Zahnbreite (TW) aufweisen, die einer Zahnfußbreite in einem radial äußeren, einem radialen Luftspalt (1104) abgewandten, Außenbereich des Statorzahns, entspricht und zwischen denen jeweils am Statorinnendurchmesser (D2) ein Statorspalt (1105) angeordnet ist, der eine Spaltbreite (SO) aufweist, und die mindestens eine Statorwicklung (1103) tragen,
wobei der Rotor (1200) einen Rotordurchmesser (D3) und eine von der Anzahl der Statorzähne (1102) abweichende Polanzahl von über den Außenumfang verteilten Rotormagneten (1201) umfasst, die als Permanentmagnete ausgebildet sind und sich stabförmig axial parallel zur Rotorachse (M) erstrecken, und die jeweils eine radiale Magnetdicke (MT) und in Umfangsrichtung eine Magnetbreite (MW) aufweisen, und die Rotormagnete (1201) jeweils am Rotordurchmesser (D3) in einem Magnetabstand (MD) beanstandet angeordnet sind,
wobei zwischen den Statorzähnen (1102) und den Rotormagneten (1201) der radiale Luftspalt (1104) mit einer radialen Luftspaltbreite (AG) ausgebildet ist,
wobei das Verhältnis der Magnetdicke (MT) zur Magnetbreite (MW) zwischen 0,4 und 0,55 beträgt,
wobei das Verhältnis der Luftspaltbreite (AG) zur Zahnbreite (TW) zwischen 0,45 und 0,65 beträgt.

2. Bremsvorrichtung nach Anspruch 1, **dadurch gekennzeichnet, dass** die Rotormagnete (1201) einen rechteckigen Querschnitt aufweisen.

3. Bremsvorrichtung nach Anspruch 1, **dadurch gekennzeichnet, dass** die Rotormagnete (1201) einen hohlzylindersegmentförmigen Querschnitt aufweisen.

4. Bremsvorrichtung nach Anspruch 1, **dadurch gekennzeichnet, dass** die Rotormagnete (1201) einen segmentartigen Querschnitt aufweisen mit einer zylindrischen Außenfläche und einer ebenen Innenfläche.

5. Bremsvorrichtung nach einem der vorangehenden Ansprüche, **dadurch gekennzeichnet, dass** ein Rotormagnet (1201) sich an dem Rotordurchmesser (D3) bezüglich der Motorachse (M) über einen Magnetwinkelabschnitt (BetaM) erstreckt, und die Rotormagnete (1201) relativ zueinander um einen Polwinkel (BetaP) versetzt angeordnet sind, wobei das Verhältnis des Magnetwinkelabschnitts (BetaM) zum Polwinkel (BetaP) zwischen 0,65 und 0,75 beträgt.

6. Bremsvorrichtung nach einem der vorangehenden Ansprüche, **dadurch gekennzeichnet, dass** die Polzahl 8 oder 10 beträgt.

7. Bremsvorrichtung nach einem der vorangehenden Ansprüche, **dadurch gekennzeichnet, dass** die Anzahl der Statorzähne (1102) 6 oder 9 beträgt.

8. Bremsvorrichtung nach einem der vorangehenden Ansprüche, **dadurch gekennzeichnet, dass** das Verhältnis der Luftspaltbreite (AG) zur Zahnbreite (TW) zwischen 0,5 und 0,6 beträgt.

9. Bremsvorrichtung nach einem der vorangehenden Ansprüche, **dadurch gekennzeichnet, dass** das Verhältnis zwischen dem Statoraußendurchmesser (D2) und dem Statorinnendurchmesser (D1) zwischen 0,55 und 0,65 beträgt.

10. Bremsvorrichtung nach einem der vorangehenden Ansprüche, **dadurch gekennzeichnet, dass** das Verhältnis zwischen der Luftspaltbreite (AG) und dem Statorinnendurchmesser (D2) zwischen 0,015 und 0,03 beträgt.

11. Bremsvorrichtung nach einem der vorangehenden Ansprüche, **dadurch gekennzeichnet, dass** die Bremsvorrichtung mindestens zwei Motoren (41, 42) aufweist.

## Claims

1. An electromechanical braking device (1) for a motor vehicle, comprising an actuating device (5) which is driveable by at least one electric motor (41, 42) and by which a brake part (22) is adjustable,
wherein the motor (41, 42) has a stator (1100) and a rotor (1200), which is rotatably mounted therein about a motor axis (M),
wherein the stator (1100) has a stator outer diameter (D1) and a stator inner diameter (D2) and comprises a number of radially inwardly projecting stator teeth (1102) which are distributed over the circumference, have a tooth width (TW) in the circumferential direction on the stator outer diameter (D1), which corresponds to a tooth root width in a radially outer external region of a stator tooth facing away from the air gap, and between which a stator gap (1105) having a gap width (SO) is in each case located on the stator inner diameter (D2), and which support at least one stator winding (1103),
wherein the rotor (1200) comprises a rotor diameter (D3) and a number of poles, which deviate from the number of stator teeth (1102), of rotor magnets (1201) which are distributed over the outer circumference, are in the form of permanent magnets and extend in a rod-shaped manner axially parallel to the rotor axis (M), and which each have a radial magnet thickness (MT) and a magnet width (MW) in the circumferential direction, and the rotor magnets (1201) are each spaced apart at a magnet distance (MD) on the rotor diameter (D3),
wherein the radial air gap (1104) having a radial air gap width (AG) is formed between the stator teeth (1102) and the rotor magnets (1201),
wherein the ratio of the magnet thickness (MT) to the magnet width (MW) is between 0.4 and 0.55,
wherein the ratio of the air gap width (AG) to the tooth width (TW) is between 0.45 and 0.65.

2. **The** braking device as claimed in claim 1, **characterized in that** the rotor magnets (1201) have a rectangular cross section.

3. **The** braking device as claimed in claim 1, **characterized in that** the rotor magnets (1201) have a cross section in the shape of a hollow cylinder segment.

4. The braking device as claimed in claim 1, **characterized in that** the rotor magnets (1201) have a segment-like cross section with a cylindrical outer surface and a flat inner surface.

5. The braking device as claimed in any one of the preceding claims, **characterized in that** a rotor magnet (1201) extends on the rotor diameter (D3) with respect to the motor axis (M) over a magnetic angle section (BetaM), and the rotor magnets (1201) are offset relative to one another by a pole angle (BetaP), the ratio of the magnetic angle section (BetaM) to the pole angle (BetaP) being between 0.65 and 0.75.

6. **The** braking device as claimed in any one of the preceding claims, **characterized in that** the number of poles is 8 or 10.

7. **The** braking device as claimed in any one of the preceding claims, **characterized in that** the number of stator teeth (1102) is 6 or 9.

8. **The** braking device as claimed in any one of the preceding claims, **characterized in that** the ratio of the air gap width (AG) to the tooth width (TW) is between 0.5 and 0.6.

9. **The** braking device as claimed in any one of the preceding claims, **characterized in that** the ratio between the stator outer diameter (D2) and the stator inner diameter (D1) is between 0.55 and 0.65.

10. The braking device as claimed in any one of the preceding claims, **characterized in that** the ratio between the air gap width (AG) and the stator inner diameter (D2) is between 0.015 and 0.03.

11. The braking device as claimed in any one of the preceding claims, **characterized in that** the braking device has at least two motors (41, 42).

## Revendications

1. Dispositif de freinage électromécanique (1) pour un véhicule automobile, comprenant un dispositif d'actionnement (5) qui peut être entraîné par au moins un moteur électrique (41, 42) et par lequel une pièce de frein (22) est réglable,
dans lequel le moteur (41, 42) possède un stator (1100) et un rotor (1200), qui y est monté de manière rotative autour d'un axe moteur (M),
dans lequel le stator (1100) possède un diamètre extérieur de stator (D1) et un diamètre intérieur de stator (D2) et comprend un nombre de dents de stator (1102) faisant saillie radialement vers l'intérieur, qui sont réparties sur la circonférence, possèdent une largeur de dent (TW) dans la direction circonférentielle sur le diamètre extérieur de stator (D1), qui correspond à une largeur de racine de dent dans une région externe radialement extérieure d'une dent de stator faisant face à l'opposé de l'entrefer, et entre lesquelles un espace de stator (1105) ayant une largeur d'espace (SO) est dans chaque cas situé sur le diamètre intérieur de stator (D2), et qui supportent au moins un enroulement de stator (1103),
dans lequel le rotor (1200) comprend un diamètre de rotor (D3) et un nombre de pôles, qui diffèrent du nombre de dents de stator (1102), d'aimants de rotor (1201) qui sont répartis sur la circonférence extérieure, sont sous la forme d'aimants permanents et s'étendent de manière en forme de tige axialement parallèlement à l'axe du rotor (M), et qui possèdent chacun une épaisseur magnétique radiale (MT) et une largeur d'aimant (MW) dans la direction circonférentielle, et les aimants de rotor (1201) sont chacun espacés d'une distance d'aimant (MD) sur le diamètre de rotor (D3),
dans lequel l'entrefer radial (1104) ayant une largeur d'entrefer radial (AG) est formé entre les dents de stator (1102) et les aimants de rotor (1201),
dans lequel le rapport de l'épaisseur magnétique (MT) à la largeur d'aimant (MW) est compris entre 0.4 et 0.55,
dans lequel le rapport de la largeur d'entrefer (AG) à la largeur de dent (TW) est compris entre 0.45 et 0.65.

2. Dispositif de freinage selon la revendication 1, **caractérisé en ce que** les aimants de rotor (1201) possèdent une section transversale rectangulaire.

3. Dispositif de freinage selon la revendication 1, **caractérisé en ce que** les aimants de rotor (1201) possèdent une section transversale en forme de segment de cylindre creux.

4. Dispositif de freinage selon la revendication 1, **caractérisé en ce que** les aimants de rotor (1201) possèdent une section transversale de type segment avec une surface extérieure cylindrique et une surface intérieure plane.

5. Dispositif de freinage selon l'une quelconque des revendications précédentes, **caractérisé en ce qu'**un aimant de rotor (1201) s'étend sur le diamètre de rotor (D3) par rapport à l'axe moteur (M) sur une section d'angle magnétique (BetaM), et les aimants de rotor (1201) sont décalés les uns par rapport aux autres par un angle de pôle (BetaP), le rapport de la section d'angle magnétique (BetaM) à l'angle de pôle (BetaP) étant compris entre 0.65 et 0.75.

6. Dispositif de freinage selon l'une quelconque des revendications précédentes, **caractérisé en ce que** le nombre de pôles est 8 ou 10.

7. Dispositif de freinage selon l'une quelconque des revendications précédentes, **caractérisé en ce que** le nombre de dents de stator (1102) est 6 ou 9.

8. Dispositif de freinage selon l'une quelconque des revendications précédentes, **caractérisé en ce que** le rapport de la largeur d'entrefer (AG) à la largeur de dent (TW) est compris entre 0.5 et 0.6.

9. Dispositif de freinage selon l'une quelconque des revendications précédentes, **caractérisé en ce que** le rapport entre le diamètre extérieur de stator (D2) et le diamètre intérieur de stator (D1) est compris entre 0.55 et 0.65.

10. Dispositif de freinage selon l'une quelconque des revendications précédentes, **caractérisé en ce que** le rapport entre la largeur d'entrefer (AG) et le diamètre intérieur de stator (D2) est compris entre 0.015 et 0.03.

11. Dispositif de freinage selon l'une quelconque des revendications précédentes, **caractérisé en ce que** le dispositif de freinage possède au moins deux moteurs (41, 42).
